# EUROPÄISCHE PATENTSCHRIFT

(11) **EP 3 916 156 B1**
(45) Veröffentlichungstag und Bekanntmachung des Hinweises auf die Patenterteilung: **20.09.2023**
(21) Anmeldenummer: 20177342.1
(22) Anmeldetag: 29.05.2020
(51) Int. Cl.: E01C 19/48

(54) **STRASSENFERTIGER MIT BEDIENEINHEIT**
ROAD FINISHER WITH OPERATING UNIT
FINISSEUSE DE ROUTE POURVUE D'UNITÉ DE COMMANDE

(43) Veröffentlichungstag der Anmeldung: 01.12.2021
(73) Patentinhaber: Joseph Vögele AG, 67067 Ludwigshafen (DE)
(72) Erfinder: THEOBALD, Maximilian, 67061 Ludwigshafen (DE); BUSCHMANN, Martin, 67435 Neustadt (DE); FLEISCHER, Bastian, 68753 Waghäusel (DE); GLÖCKNER, Tom, 67278 Bockenheim (DE); WEISER, Ralf, 68526 Ladenburg (DE)
(74) Vertreter: Grünecker Patent- und Rechtsanwälte PartG mbB

(56) Entgegenhaltungen:
- EP-A1- 3 067 774
- EP-B1- 3 214 223
- DE-A1-102018 208 500
- DE-U1-202012 003 217

## Beschreibung

Die vorliegende Erfindung betrifft einen Straßenfertiger zum Einbau eines Fahrbahnbelags.

Vor Beginn des Einbaubetriebs sind einige vorbereitende Tätigkeiten durchzuführen, um einen Straßenfertiger betriebsbereit zu machen. So muss beispielsweise ein abgesenktes Dach eines Hauptbedienstands nach oben gefahren, die Einbaubohle abgesenkt, ein Hauptantrieb gestartet und ein Steuerungssystem in einen Betriebsmodus versetzt werden. Komplementäre Tätigkeiten werden entsprechend nach Betriebsende durchgeführt, insbesondere um den Straßenfertiger vor Witterungseinflüssen und Vandalismus zu schützen, ihn umzusetzen oder für einen Transport zu verladen.

Aus der EP 3 214 223 B1 ist es bekannt, einen Straßenfertiger in einen Verladezustand zu versetzen, indem nach Betätigen eines einzigen Schalters einer Bedieneinheit, welche seitlich am Chassis des Straßenfertigers angeordnet ist, automatisch ein Ablauf in Gang gesetzt wird, worin ein Dach abgesenkt, eine Einbaubohle und eine Verteilerschnecke angehoben und die Einbaubohle, wenn als Ausziehbohle gebildet, eingefahren wird. Aus der EP 3 067 774 A1 ist ein Straßenfertiger bekannt mit einem Steuerungssystem, einem Hauptbedienstand, einem Hauptantrieb und einer Einbaubohle, sowie einer Bedienvorrichtung im Hauptbedienstand und eine weitere Bedienvorrichtung, welche außerhalb des Hauptbedienstand angeordnet ist. Mit diesen beiden Bedienvorrichtungen können sämtliche Funktionen des Straßenfertigers gesteuert werden. Aus der DE 20 2012 003 217 U1 und DE 10 2018 208 500 A1 sind weitere Bedienvorrichtungen für eine Baumaschine bekannt. Aufgabe der vorliegenden Erfindung ist es, einen Straßenfertiger mit verbesserten Bedienmöglichkeiten bereitzustellen.

Die Aufgabe wird gelöst durch einen Straßenfertiger gemäß Anspruch 1 sowie ein Verfahren zum Betrieb eines Straßenfertigers gemäß Anspruch 15. Vorteilhafte Weiterbildungen der Erfindung sind in den Unteransprüchen angegeben.

Ein erfindungsgemäßer Straßenfertiger umfasst ein Steuerungssystem, einen Hauptbedienstand, ein höhenverstellbares Dach, einen Hauptantrieb, wenigstens ein Beleuchtungselement und eine Einbaubohle. Des Weiteren umfasst der Straßenfertiger eine Bedieneinheit, welche außerhalb des Hauptbedienstands angeordnet ist und eine Mehrzahl von Bedienelementen aufweist, wovon ein Bedienelement zum Ein- und/oder Ausschalten des Steuerungssystems betätigbar ist, ein Bedienelement zum Heben und/oder Senken des Dachs betätigbar ist, ein Bedienelement zum Starten und/oder Stoppen des Hauptantriebs betätigbar ist, ein Bedienelement zum Einschalten und/oder Ausschalten zumindest eines Beleuchtungselements betätigbar ist und ein Bedienelement zum Heben und/oder Senken der Einbaubohle betätigbar ist.

Die Bedienelemente können unterschiedlich und, je nach Funktion, beispielsweise als Schalter, Taste, Bedienknopf, Hebel, berührungsempfindlicher Touchscreen, in Form eines mit einem einsteckbaren Schlüssel betätigbaren Zündschlosses, oder Ähnlichem, gestaltet sein. Zur physischen Gestaltung des jeweiligen Bedienelements passend kann die Funktion, und damit die Bedienung gestaltet sein. Es können für die jeweiligen Funktionen eine, zwei oder mehrere Bedienelemente vorgesehen sein. Es kann beispielsweise dieselbe Taste bei erstmaligem Drücken eine Funktion des Straßenfertigers einschalten und bei nochmaligem Drücken die Funktion wieder ausschalten. Ebenso kann eine Taste je nach momentanem Status der Funktion jeweils den gegenteiligen Steuerungsbefehl geben, also einen Motor einschalten, wenn dieser aus ist, und umgekehrt. Ebenso kann eine Funktion des Straßenfertigers in Abhängigkeit einer Frequenz und/oder Länge des Betätigens eines Bedienelements geändert werden. So kann beispielsweise bei Drücken und Halten einer Taste eine Beleuchtung gedimmt werden, so dass ihre Helligkeit zunimmt. Wird die Taste hingegen zweimal kurz hintereinander gedrückt und beim zweiten Drücken gehalten, so wird die Helligkeit nach unten gedimmt. Ebenso können für komplementäre Funktionen bzw. für Zustände einer Funktion separate Tasten vorhanden sein, also beispielsweise eine Taste zum Heben des Dachs und eine Taste zum Senken. Dabei kann eine Taste auch derart gestaltet sein, dass nicht nur zwischen zwei diskreten Zuständen gewechselt werden kann, beispielsweise an/aus, Position oben/unten, sondern auch stufenlos Zwischenzustände eingestellt werden können, beispielsweise das Dach je nach Dauer der Betätigung des Bedienelements stufenlos oder in Stufen abgesenkt oder angehoben wird. Ebenso können auch drei oder mehrere Tasten für unterschiedliche Zustände einer Funktion vorgesehen sein. So kann beispielsweise eine Taste die Einbaubohle in eine oberste Position bringen, eine zweite Taste die Einbaubohle in eine mittlere Position bringen und eine dritte Taste die Einbaubohle in eine unterste Position bringen.

Zweckmäßig sind die Tasten derart ausgestaltet, dass keine Öffnungen in das Innere der Bedieneinheit vorhanden sind, sondern beispielsweise eine elastische Abdeckung lediglich den Druck auf ein darunterliegendes elektronisches Bauteil weiterleitet.

Mit einer erfindungsgemäßen Bedieneinheit ist es nun möglich, die vorbereitenden oder abschließenden Arbeiten am Straßenfertiger von außerhalb des Hauptbedienstands durchzuführen, insbesondere ist die Bedieneinheit dazu an einer Stelle des Straßenfertigers angebracht, welche von einem am Boden stehenden Bediener erreichbar ist. Dadurch, dass alle relevanten Verstellmöglichkeiten durch eigene Bedienelemente getrennt voneinander ansprechbar sind, kann der Bediener jeweils die gerade relevanten Funktionen betätigen. Dies verringert die benötigte Zeit und erhöht außerdem die Sicherheit für die anwesenden Personen.

Das Ein- und Ausschalten des Steuerungssystems kann ähnliche Funktionen wie das Ein- und Ausschalten der Zündung bei einem PKW haben. Es ermöglicht das Hochfahren der Maschinensteuerung noch vor dem Aufsteigen auf die Maschine. Es können also Funktionen, basierend auf der elektrischen Versorgung, wie beispielsweise eine Beleuchtung, einschaltbar sein, ohne dass ein Hauptantrieb, beispielsweise ein Dieselmotor, laufen muss. Dieser Hauptantrieb kann wiederrum beispielsweise durch Drücken eines Start/Stop-Knopfes gestartet und gestoppt werden. Ebenso könnte Zündung und Hauptantrieb abhängig von einer Schlüsseldrehung in einem Zündschloss betätigt werden. Das Zündschloss ist dabei idealerweise äquivalent zu dem des Hauptbedienstands. Dadurch, dass dies nun bereits von außerhalb des Hauptbedienstands des Stra-βenfertigers möglich ist, kann das Dach unter Verwendung eines durch den Hauptantrieb betriebenen Hydrauliksystems, insbesondere dem Haupthydrauliksystem, angehoben und abgesenkt werden. Ebenso kann nun das Heben und Senken der Einbaubohle mit einem durch den Dieselmotor versorgten Hydrauliksystem auch von außerhalb des Hauptbedienstands erfolgen. Es kann also auf ein zusätzliches elektrisches Hydraulikaggregat verzichtet werden. Es stehen die Funktionen der Maschine deutlich früher zur Verfügung, woraus eine Zeitersparnis resultiert.

Der Bediener muss zum Betätigen der erwähnten Funktionen nicht mehr auf den Hauptbedienstand aufsteigen, was einerseits eine Zeitersparnis darstellt, genauso aber auch eine Arbeitserleichterung und einen Sicherheitsgewinn darstellt, da dies bei angehobener Einbaubohle und/oder abgesenktem Dach bislang nur sehr erschwert möglich ist. Es kann also nun vor Arbeitsbeginn die Bohle auf Bodenniveau abgesenkt werden, wodurch das Aufsteigen auf die Maschine deutlich erleichtert wird. Nach Arbeitsende kann die Bohle angehoben werden, wodurch das Aufsteigen und dadurch auch Vandalismus erschwert wird.

Darüber hinaus kann die vollständige Arbeitsbeleuchtung eingeschaltet werden, sobald der Motor läuft. Dadurch kann nachts zum einen direkt mit erforderlichen Rüstarbeiten begonnen werden, und dies führt zum anderen zu mehr Sicherheit im gesamten Bereich um den Fertiger.

Bevorzugt ist die Bedieneinheit lösbar am Straßenfertiger angeordnet. Die Bedieneinheit kann angeschraubt, mittels Einrasten, Einstecken, mittels Magnet oder Ähnlichem am Straßenfertiger fixiert werden. So kann die Bedieneinheit vom Straßenfertiger nach Betriebsende abgenommen und andernorts sicher verwahrt werden, so dass kein unbefugtes Betätigen möglich ist. Damit kann auch auf einen Schlüssel oder ähnliche Identifizierungssysteme verzichtet werden, welche ansonsten vorgesehen sein können. Darüber hinaus kann beispielsweise die Bedieneinheit üblicherweise an der Einbaubohle angeordnet sein, jedoch in eine Halterung an der Rückwand des Straßenfertigers umgesetzt werden, wenn die Einbaubohle vom Straßenfertiger abgenommen wird.

In einer vorteilhaften Variante ist die Bedieneinheit mittels Kabel, insbesondere mittels lösbarer Steckverbindung, mit dem Steuerungssystem verbunden. Über eine Kabelverbindung können die Daten zur Steuerung der Funktionen der Bedieneinheit übertragen werden. Zudem kann darüber eine Stromversorgung erfolgen, welche zum Betrieb der Bedieneinheit nötig ist, wobei die Bedieneinheit auch Stromspeicher, insbesondere Akkumulatoren, aufweisen kann, welche über die Kabelverbindung aufgeladen werden können.

Zweckmäßig ist die Bedieneinheit mittels einer Funkverbindung mit dem Steuerungssystem verbunden. So kann die Bedieneinheit auch verwendet werden, wenn sie vom Straßenfertiger abgenommen ist. Dadurch kann ein Bediener die Funktionen mit Abstand zum Straßenfertiger und damit verbessertem Überblick betätigen. Ist die Bedieneinheit am Straßenfertiger angebracht, so kann der Datenaustausch ebenfalls mittels Funkverbindung oder auch über eine Kabelverbindung stattfinden. Um Kabelverbindungen generell überflüssig zu machen, kann ein Aufladen von Strom- bzw. Spannungsspeichern in der Bedieneinheit auch induktiv erfolgen. Somit kann vollständig auf durch Witterung beeinträchtigbare Steckverbindungen verzichtet werden.

Vorzugsweise ist die Bedieneinheit an der Einbaubohle angeordnet. Hier kann die Bedieneinheit an vorhandenen Bauteilen der Einbaubohle gut erreichbar positioniert werden. Insbesondere bei einer Verladung auf einen Tieflader ist nur noch der Bereich hinter der Einbaubohle zugänglich, so dass die seitliche Anbringung am Chassis des Straßenfertigers von Nachteil wäre.

In einer weiteren vorteilhaften Variante ist die Bedieneinheit an einem Bohlenaufstieg angeordnet. Als Bohlenaufstieg wird der Zugang zum Hauptbedienstand bezeichnet, welcher üblicherweise an der Hinterseite des Straßenfertigers über die Bohle führt und beispielsweise durch ebene Trittflächen und einen Handlauf bzw. ein Geländer charakterisiert ist. Hier ist die Bedieneinheit für den Fahrer gut erreichbar, insbesondere, wenn die Bedieneinheit an dem unteren Abschnitt an der Einbaubohle angeordnet ist. Da der Fahrer im Anschluss ohnehin auf den Hauptbedienstand aufsteigt, entfallen Wege um den Straßenfertiger herum, im Gegensatz zu einer seitlichen Anordnung der Bedieneinheit am Straßenfertiger. Somit ist eine weitere Zeitersparnis gegeben.

In einer bevorzugten Variante weist der Straßenfertiger eine verschließbare Abdeckung auf, welche im verschlossenen Zustand einen Zugriff auf die Bedieneinheit verhindert. Es kann sich beispielsweise um eine schwenkbare Klappe handeln, welche auf- und zuklappbar ist. Somit wird die Bedieneinheit vor Schmutz und Witterungseinflüssen geschützt. Die Abdeckung kann einen Schließmechanismus umfassen, welcher beispielsweise mittels geeignetem Schlüssel eine Ver- und Entriegelung erlaubt. Dazu kann die Bedieneinheit in einer Vertiefung angeordnet sein, welche durch die Abdeckung in der Art eines Kastens verschlossen wird. Zweckmäßig ist die Abdeckung aus stabilem Metallblech gefertigt. Die Abdeckung kann an der Einbaubohle angeordnet sein, so dass die Bedieneinheit zur Verwendung an der entsprechenden Position gut erreichbar ist und lediglich die Abdeckung dazu geöffnet werden muss. Ebenso kann die Abdeckung auch beispielsweise an einer Position am Chassis des Straßenfertigers angeordnet sein, wohin die Bedieneinheit lediglich zum Verwahren, wenn nicht benötigt, beispielsweise nach Arbeitsende, verbracht wird.

In einer weiteren zweckmäßigen Variante weist die Bedieneinheit ein oder mehrere Anzeigeelemente auf, welche jeweils eine Information einer der mittels der Bedienelemente verstellbaren Bauelemente wiedergeben. So können beispielsweise Leuchtpunkte in den Farben Rot, Grün, Gelb vorgesehen sein, welche einen Betriebszustand des Hauptantriebs oder des Steuerungssystems, oder einen Verriegelungszustand der Einbaubohle oder des Dachs anzeigen. Ebenso können auch Zahlen oder Schrift auf einem oder mehreren geeigneten Displays wiedergegeben werden. Dadurch bekommt der Bediener die Information, in welchem Zustand sich das jeweilige Funktionselement befindet und welche Einstellungen vorgenommen werden können.

Vorzugsweise ist zumindest ein Beleuchtungselement dazu konfiguriert, nach Betätigen des Bedienelements zum Ein- oder Ausschalten zumindest eines Beleuchtungselements nach Ablauf einer vorbestimmten Zeitspanne zu erlöschen. So kann sich der Fahrer sicher vom Straßenfertiger entfernen. Es können beliebige Zeitspannen vorgesehen sein, beispielsweise 10, 30, oder 60 Sekunden. Das Bedienelement kann derart konfiguriert sein, dass beim Betätigen ein bereits eingeschaltetes Beleuchtungselement nach der vorgegebenen Zeitspanne ausgeschaltet wird. Ebenso kann das Beleuchtungselement zunächst eingeschaltet werden, um nach der vorgegebenen Zeitspanne wieder zu erlöschen. Es können auch mehrere Beleuchtungselemente über dasselbe Bedienelement entsprechend geschaltet werden. Zusätzlich können unterschiedliche Schaltzeiten in Abhängigkeit einer Betätigung des Bedienelements vorgesehen sein. So kann beispielsweise ein schnelles zweifaches Drücken des Bedienelements hintereinander eine doppelt so lange Leuchtdauer auslösen wie ein einmaliges Drücken. Denkbar wäre es auch, eine Beleuchtungsintensität, also Helligkeit, beispielsweise in Abhängigkeit einer Dauer des Drückens des Bedienelements zu steuern. Zudem kann vorgesehen sein, dass auch beim Ausschalten der Zündung, ob an Hauptbedienstand oder Bedieneinheit, ein oder mehrere Beleuchtungselemente zeitverzögert erlöschen.

In einer weiteren zweckmäßigen Variante ist zum Heben und Senken des Dachs ein Hubmechanismus vorgesehen, welcher eine automatisch lösbare und automatisch arretierbare Endlagenverriegelung umfasst. Somit ist es nun nicht mehr nötig auf den Hauptbedienstand aufzusteigen, um das Dach in seiner Endlage, beispielsweise der nach oben angehobenen Betriebsposition, manuell mittels Bolzen oder Ähnlichem zu fixieren. Dies stellt eine deutliche Arbeitserleichterung und Zeitersparnis dar. Die automatische Dachverriegelung kann dabei auf mehrere Arten erfolgen. Möglich ist beispielsweise ein Verbolzen mit Hilfe eines zusätzlichen Stellantriebs, wie Hydraulikzylinder oder elektrischer Stellmotor. Ebenso ist ein kraftschlüssiges Festsetzen mit Hilfe eines entsprechenden Klemmelements möglich. Ebenso ist eine hermetische Abschottung der Kammern des Dach-Hubzylinders mit Hilfe von geeigneten Ventilen denkbar. Dabei bieten die beiden letztgenannten Lösungen den zusätzlichen Vorteil, dass das Dach in jeder beliebigen Position verriegelt werden kann. Es können für die genannten Varianten entsprechende Hydraulikzylinder eingesetzt werden.

Erfindungsgemäß ist das Steuerungssystem dazu konfiguriert, ein Starten des Hauptantriebs zu erlauben, noch bevor das Steuerungssystem selbst vollständig nach Einschalten in einen Betriebsmodus versetzt ist. Das Steuerungssystem kann eine Programmierung derart aufweisen, dass zunächst nach Einschalten, beispielsweise durch Drehen eines Zündschlüssels, das Steuerungssystem in einen Startmodus übergeht. Dieser kann sich dadurch auszeichnen, dass nur Softwareteile mit geringem Umfang in einen Arbeitsspeicher geladen werden oder bereits in diesem vorhanden sind, so dass verhältnismäßig schnell, nahezu ohne merkliche Zeitverzögerung, deren Funktionen zur Verfügung stehen. In diesem Startmodus stehen die Funktionen zum Start des Hauptantriebs zur Verfügung, wobei der Start beispielsweise durch Drücken einen Start-Knopfs oder durch Weiterdrehen eines Zündschlüssels erfolgen kann. An den Startmodus anschließend können dann weitere Softwareteile nachgeladen oder aktiviert werden, so dass das Steuerungssystem in den Betriebsmodus übergeht, in dem sämtliche Maschinenfunktionen zur Verfügung stehen. Der Übergang in den Betriebsmodus kann auch beinhalten, dass das Steuerungssystem Schnittstellen abfragt, um zu erkennen, in welcher Konfiguration der Straßenfertiger aufgebaut ist, beispielsweise welche Einbaubohle an der Zugmaschine installiert ist. Damit kann das vollständige Hochfahren des Steuerungssystems parallel zum Aufsteigen auf die Maschine und betriebsvorbereitenden Maßnahmen, sowie bei bereits gestartetem Hauptantrieb erfolgen, was eine deutliche Zeitersparnis darstellt.

In einer weiteren zweckmäßigen Variante weist die Bedieneinheit Bedienelemente auf, welche zur Steuerung von Funktionen des Straßenfertigers im Einbaubetrieb vorgesehen sind. So können entsprechende Steuerungen, beispielsweise das Ändern der Bohleneinstellungen, auch von derselben Bedieneinheit vorgenommen werden. Es reduziert sich ein Verkabelungs- und Wartungsaufwand.

Ein erfindungsgemäßes Verfahren zum Betrieb eines Straßenfertigers, welcher ein Steuerungssystem, einen Hauptbedienstand, ein höhenverstellbares Dach, einen Hauptantrieb, wenigstens ein Beleuchtungselement, eine Einbaubohle sowie eine Bedieneinheit, welche eine Mehrzahl von Bedienelementen aufweist, umfasst, umfasst die Verfahrensschritte:
- Betätigen eines Bedienelements zum Ein- und/oder Ausschalten zumindest eines Beleuchtungselements,
- Betätigen eines Bedienelements zum Heben und/oder Senken des Dachs,
- Betätigen eines Bedienelements zum Starten und/oder Stoppen des Hauptantriebs,
- Betätigen eines Bedienelements zum Heben und/oder Senken der Einbaubohle, und
- Betätigen eines Bedienelements zum Ein- und/oder Ausschalten des Steuerungssystems.

Erfindungsgemäß wird der Hauptantrieb gestartet, bevor das Steuerungssystem vollständig nach dem Einschalten in einen Betriebsmodus versetzt ist. Wie bereits oben erläutert, kann das Steuerungssystem zunächst in einen Startmodus mit begrenztem Funktionsumfang und damit geringer Rechenbelastung für einen Prozessor und einen Arbeitsspeicher übergehen, und anschließend die vollständige Betriebssoftware laden oder aktivieren, um in einen Betriebsmodus überzugehen. In dem Startmodus ist bereits das Starten des Hauptantriebs möglich, womit auch sekundäre Systeme wie eine Beleuchtung oder ein Hydrauliksystem frühzeitig zur Verfügung stehen können, sobald deren Betrieb durch das Steuerungssystem erlaubt wird, was auch bereits im Startmodus der Fall sein kann.

Im Folgenden werden Ausführungsbeispiele der Erfindung anhand der Figuren näher beschrieben. Dabei zeigen
- Figur 1:: eine perspektivische Ansicht eines Straßenfertigers,
- Figur 2:: eine schematische Darstellung einer Bedieneinheit,
- Figur 3:: eine perspektivische Darstellung einer Bedieneinheit,
- Figur 4:: eine perspektivische Darstellung einer Bedieneinheit angeordnet am Straßenfertiger,
- Figur 5:: eine schematische Darstellung eines Hubmechanismus zur Dachverstellung mit Hydraulikzylinder mit Endlagenverriegelung,
- Figur 6:: eine Schnittansicht eines Hydraulikzylinders mit Endlagenverriegelung,
- Figur 7:: eine schematische Darstellung einer Endlagenverriegelung durch einen automatisch verfahrbaren Bolzen,
- Figur 8:: eine schematische Darstellung einer Endlagenverriegelung durch Rotationsschnappverschluss.

Einander entsprechende Komponenten sind in den Figuren jeweils mit gleichen Bezugszeichen versehen.

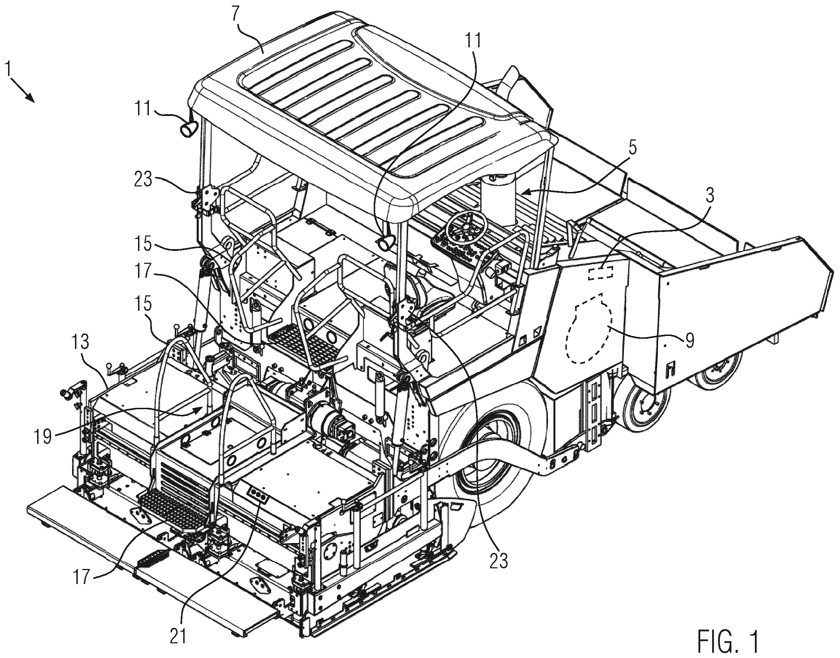

Figur 1 zeigt einen Straßenfertiger 1 mit einem Steuerungssystem 3, einem Hauptbedienstand 5, einem höhenverstellbaren Dach 7, einem Hauptantrieb 9, Beleuchtungselementen 11 und einer Einbaubohle 13. Steuerungssystem 3 und Hauptantrieb 9 sind hier als unter einer Chassisabdeckung verborgen angedeutet. Bei dem Hauptantrieb 9 handelt es sich üblicherweise um einen Dieselmotor. Die Einbaubohle 13 kann eine feste Breite haben oder Ausziehteile aufweisen, mit denen die Bohlenbreite vergrößert werden kann. Zum Hauptbedienstand 5 ist mit Geländerteilen 15 und Trittflächen 17 ein Bohlenaufstieg 19 gebildet. In direkter Nähe zum Bohlenaufstieg 19 ist eine Bedieneinheit 21 an der Einbaubohle 13 angeordnet. Genauso kann die Bedieneinheit 21 jedoch auch direkt an einem Geländerteil 15 oder an einem anderen geeigneten Ort vorgesehen sein. Das Dach 7 ist mittels eines Hubmechanismus 23 höhenverstellbar gelagert.

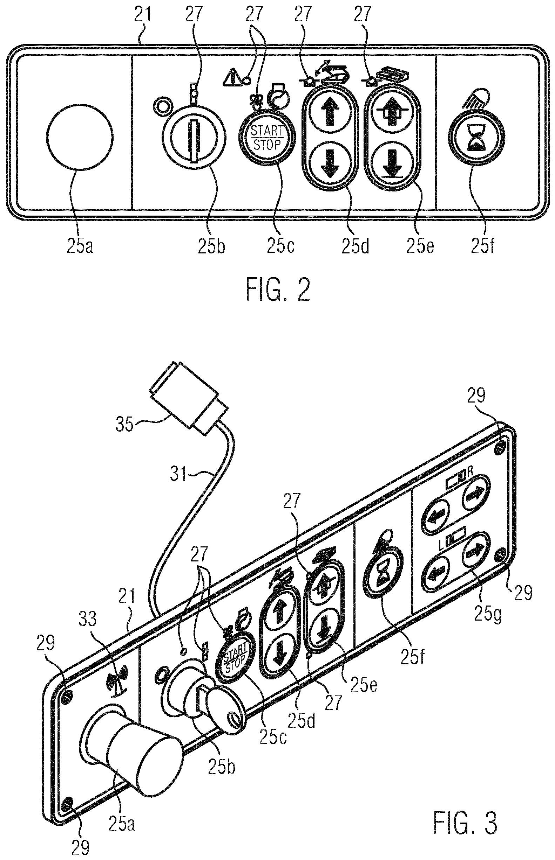

Figur 2 zeigt eine schematische Darstellung einer Bedieneinheit 21 mit mehreren Bedienelementen 25, welche in diesem Beispiel ein Not-Aus-Knopf 25a, ein Zündschloss 25b zum Einschalten der Zündung, ein Start/Stop-Knopf 25c für den Hauptantrieb, jeweils ein Bedienelement 25d zum Heben und Senken des Dachs 7, jeweils ein Bedienelement 25e zum Heben und Senken der Einbaubohle 13, sowie ein Bedienelement 25f zum zeitverzögerten Ausschalten eines Beleuchtungselements 11 sind. Es sind Anzeigeelemente 27 in Form von Leuchtpunkten, beispielsweise in den Farben Rot, Grün oder Gelb, vorhanden, welche einen Zustand der Zündung, des Hauptantriebs 9, einer Verriegelung des Dachs 7 oder einer Verriegelung der Einbaubohle 13 angeben.

Figur 3 zeigt eine perspektivische Darstellung einer Bedieneinheit 21 mit den Bedienelementen 25 a-f und den Anzeigeelementen 27. Zusätzlich sind Bedienelemente 25g vorhanden, welche zur Steuerung von Funktionen des Straßenfertigers 1 im Einbaubetrieb, also insbesondere von für den Einbau selbst relevanten Funktionen, dienen. Hier sind beispielhaft Bedienelemente 25g zur Verstellung von linken und rechten Ausziehelementen der Einbaubohle 13 dargestellt. Die Bedieneinheit 21 kann lösbar, beispielsweise mittels Magnet, an dem Straßenfertiger 1 befestigt sein, oder fest verbaut beziehungsweise nur mit Werkzeug lösbar sein. In dieser Darstellung veranschaulichen vier Schrauben 29 eine dauerhaft verbaute Variante. In allen Varianten kann die Bedieneinheit 21 mittels Kabelverbindung 31 und/oder Funkverbindung 33, welche hier symbolisch dargestellt ist, da die nötigen Antennen und Bauteile üblicherweise im Inneren der Bedieneinheit 21 verborgen sind, mit dem Steuerungssystem 3 des Straßenfertigers 1, bzw. einem Bus-System verbunden sein. Eine lösbare Steckverbindung 35 kann an dem Kabel 31 angeordnet sein.

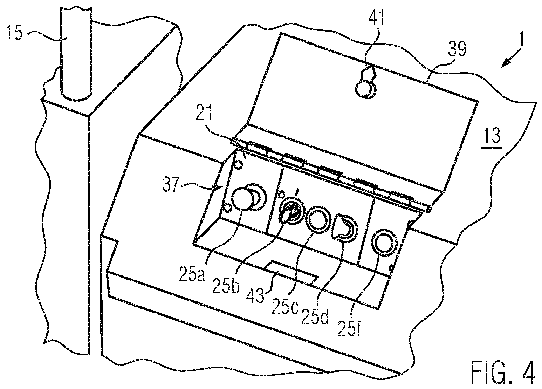

Figur 4 zeigt eine perspektivische Darstellung einer Bedieneinheit 21 angeordnet am Straßenfertiger 1, beispielsweise an der Einbaubohle 13 in der Position wie in Figur 1 gezeigt. Die Bedieneinheit 21 ist in einer Vertiefung 37 angeordnet, welche mit einer schwenkbaren Abdeckung 39 verschließbar ist. Die Abdeckung 39 weist einen Schließmechanismus 41 in Form eines drehbaren Riegels auf, mit welchem die geschlossene Abdeckung 39 beispielsweise mit einem Schlüssel verriegelbar ist, indem der Schließmechanismus 41 in eine Ausnehmung 43 eingreift. So ist ein unbefugter Zugriff auf die Bedieneinheit verhindert. Die Anordnung und Ausgestaltung der Bedienelemente 25 weicht von der Darstellung in Figur 3 ab. Das Heben und Senken des Dachs 7 ist beispielsweise mit einem Drehknopf als Bedienelement 25d vorgesehen.

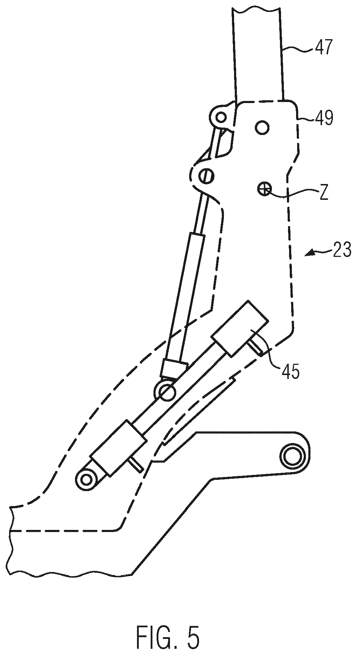

Figur 5 zeigt eine schematische Darstellung eines Hubmechanismus 23 zur Dachverstellung mit einem Hydraulikzylinder 45 mit eingebauter Endlagenverriegelung. Der Hydraulikzylinder 45 dreht den oberen Gestängeteil 47 gegen das Basisteil 49 um eine Drehachse Z, um das Dach nach vorne und unten zu klappen. Die Endlagenverriegelung in dem Hydraulikzylinder 45 kann, wie oben beschrieben, mechanisch oder beispielsweise mittels Ventilsteuerung erfolgen.

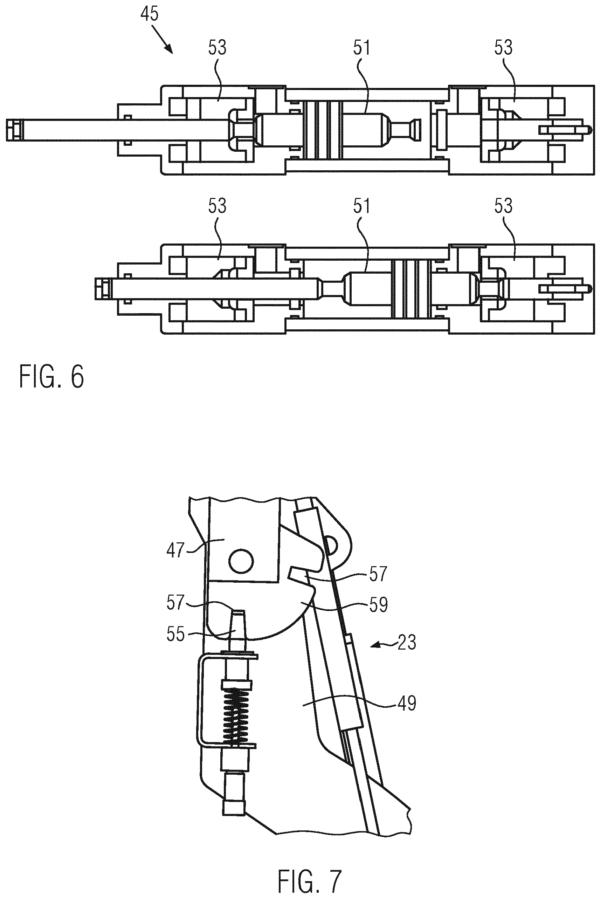

Figur 6 zeigt den Hydraulikzylinder 45 in einer Schnittansicht in einer nach links und einer nach rechts bewegten Position eines Hydraulikkolbens 51. Verriegelungselemente 53 stellen jeweils die Endlagenverrieglung her.

Figur 7 zeigt eine schematische Darstellung einer Endlagenverriegelung des Hubmechanismus 23 durch einen automatisch verfahrbaren Bolzen 55, welcher in den Endlagen mit Ausnehmungen 57 eine Scheibe 59 in Eingriff kommt, welche sich mit dem oberen Gestängeteil 47 mit dreht, wenn dieser durch den Hydraulikzylinder 45 (in dieser Darstellung nicht sichtbar) bewegt wird.

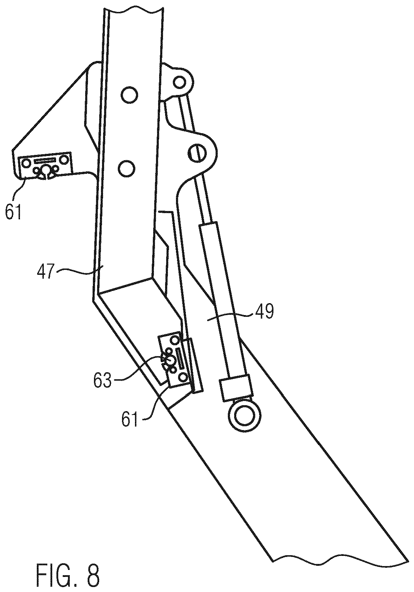

Figur 8 zeigt eine schematische Darstellung einer Endlagenverriegelung durch einen Rotationsschnappverschluss 61. Hierbei rastet ein Zapfen 63 des oberen, drehbaren Gestängeteils 47 in den jeweiligen Endlagen in den Schnappverschluss 61 des Basisteils 49 ein. Der Schnappverschluss 61 entspricht von der Funktionsweise etwa dem eines Türschlosses bei einem PKW.

Ausgehend von den oben dargestellten Ausführungsformen eines Straßenfertigers 1 sind vielerlei Variationen desselben möglich. So kann die Bedieneinheit 21 an jeder zweckmäßigen Stelle des Straßenfertigers 1, beispielsweise auch seitlich, angebracht werden. Die Bedienelemente 25 können neben den gezeigten auch andere zweckmäßige Funktionen aufweisen und dazu eine entsprechende Form, wie beispielsweise als Tastwippen oder Drehschalter, haben. Die verzögerte Abschaltautomatik der Beleuchtungselemente 11 kann sich auf jedes Beleuchtungselement 11 beziehen, bei dem dies zweckmäßig ist, beispielsweise eine Beleuchtung des Hauptbedienstands 5 oder Außenbeleuchtung des Straßenfertigers 1.

## Patentansprüche

1. Straßenfertiger (1) mit einem Steuerungssystem (3), einem Hauptbedienstand (5), einem höhenverstellbaren Dach (7), einem Hauptantrieb (9), wenigstens einem Beleuchtungselement (11), einer Einbaubohle (13), und einer Bedieneinheit (21), welche außerhalb des Hauptbedienstands (5) angeordnet ist und eine Mehrzahl von Bedienelementen (25) aufweist, wovon ein Bedienelement (25b) zum Ein- und/oder Ausschalten des Steuerungssystems (3) betätigbar ist, ein Bedienelement (25d) zum Heben und/oder Senken des Dachs (7) betätigbar ist, ein Bedienelement (25c) zum Starten und/oder Stoppen des Hauptantriebs (9) betätigbar ist, ein Bedienelement (25f) zum Einschalten und/oder Ausschalten zumindest eines Beleuchtungselements (11) betätigbar ist und ein Bedienelement (25e) zum Heben und/oder Senken der Einbaubohle (13) betätigbar ist, **dadurch gekennzeichnet, dass** das Steuerungssystem (3) dazu konfiguriert ist, ein Starten des Hauptantriebs (9) zu erlauben, noch bevor das Steuerungssystem (3) selbst vollständig nach Einschalten in einen Betriebsmodus versetzt ist.

2. Straßenfertiger nach Anspruch 1, **dadurch gekennzeichnet, dass** das Steuerungssystem (3) dazu konfiguriert ist, bis zum Starten des Hauptantriebs (9) einen ersten Softwareteil, welcher nicht alle Betriebsfunktionen des Straßenfertigers (1) umfasst, in einen Arbeitsspeicher zu laden oder in diesem vorzuhalten.

3. Straßenfertiger nach Anspruch 2, **dadurch gekennzeichnet, dass** das Steuerungssystem (3) dazu konfiguriert ist, nach Starten des Hauptantriebs (9) einen verbleibenden Softwareteil in den Arbeitsspeicher zu laden oder zu aktivieren, welcher einen Betriebsmodus ermöglicht.

4. Straßenfertiger nach Anspruch 3, **dadurch gekennzeichnet, dass** das Steuerungssystem (3) dazu konfiguriert ist, beim Übergang in den Betriebsmodus Schnittstellen abzufragen, um zu erkennen, in welcher Konfiguration der Straßenfertiger (1) aufgebaut ist.

5. Straßenfertiger nach einem der vorangegangenen Ansprüche, **dadurch gekennzeichnet, dass** die Bedieneinheit (21) lösbar am Straßenfertiger (1) angeordnet ist.

6. Straßenfertiger nach einem der vorangegangenen Ansprüche, **dadurch gekennzeichnet, dass** die Bedieneinheit (21) mittels Kabel (31), insbesondere mittels lösbarer Steckverbindung (35), mit dem Steuerungssystem (3) verbunden ist.

7. Straßenfertiger nach einem der vorangegangenen Ansprüche, **dadurch gekennzeichnet, dass** die Bedieneinheit (21) mittels einer Funkverbindung (33) mit dem Steuerungssystem (3) verbunden ist.

8. Straßenfertiger nach einem der vorangegangenen Ansprüche, **dadurch gekennzeichnet, dass** die Bedieneinheit (21) an der Einbaubohle (13) angeordnet ist.

9. Straßenfertiger nach einem der vorangegangenen Ansprüche, **dadurch gekennzeichnet, dass** die Bedieneinheit (21) an einem Bohlenaufstieg (19) angeordnet ist.

10. Straßenfertiger nach einem der vorangegangenen Ansprüche, **gekennzeichnet durch** eine verschließbare Abdeckung (39), welche im verschlossenen Zustand einen Zugriff auf die Bedieneinheit (21) verhindert.

11. Straßenfertiger nach einem der vorangegangenen Ansprüche, **dadurch gekennzeichnet, dass** die Bedieneinheit (21) ein oder mehrere Anzeigeelemente (27) aufweist, welche jeweils eine Information einer der mittels der Bedienelemente (25) verstellbaren Bauelemente wiedergeben.

12. Straßenfertiger nach einem der vorangegangenen Ansprüche, **dadurch gekennzeichnet, dass** zumindest ein Beleuchtungselement (11) dazu konfiguriert ist, nach Betätigen des Bedienelements (25) zum Ein- oder Ausschalten zumindest eines Beleuchtungselements (11) nach Ablauf einer vorbestimmten Zeitspanne zu erlöschen.

13. Straßenfertiger nach einem der vorangegangenen Ansprüche, **dadurch gekennzeichnet, dass** zum Heben und Senken des Dachs (7) ein Hubmechanismus (23) vorgesehen ist, welcher eine automatisch lösbare und automatisch arretierbare Endlagenverriegelung (53, 55, 61) umfasst.

14. Straßenfertiger nach einem der vorangegangenen Ansprüche, **dadurch gekennzeichnet, dass** die Bedieneinheit (21) Bedienelemente (25g) aufweist, welche zur Steuerung von Funktionen des Straßenfertigers (1) im Einbaubetrieb vorgesehen sind.

15. Verfahren zum Betrieb eines Straßenfertigers (1) nach einem der Ansprüche 1 bis 14, welcher ein Steuerungssystem (3), einen Hauptbedienstand (5), ein höhenverstellbares Dach (7), einen Hauptantrieb (9), wenigstens ein Beleuchtungselement (11), eine Einbaubohle (13) sowie eine Bedieneinheit (21), welche eine Mehrzahl von Bedienelementen (25) aufweist, umfasst, mit den Verfahrensschritten
- Betätigen eines Bedienelements (25f) zum Ein- und/oder Ausschalten zumindest eines Beleuchtungselements (11),
- Betätigen eines Bedienelements (25d) zum Heben und/oder Senken des Dachs (7),
- Betätigen eines Bedienelements (25c) zum Starten und/oder Stoppen des Hauptantriebs (9),
- Betätigen eines Bedienelements (25e) zum Heben und/oder Senken der Einbaubohle (13), **gekennzeichnet durch** den Verfahrensschritt
- Betätigen eines Bedienelements (25b) zum Ein- und/oder Ausschalten des Steuerungssystems (3), wobei der Hauptantrieb (9) gestartet wird, bevor das Steuerungssystem (3) vollständig nach dem Einschalten in einen Betriebsmodus versetzt ist.

## Claims

1. Road paver (1) with a control system (3), a main operator control stand (5), a height-adjustable roof (7), a main drive (9), at least one lighting element (11), a paving screed (13), and an operating unit (21) which is arranged outside the main operator control stand (5) and has a plurality of operating elements (25), of which an operating element (25b) is operable to switch the control system (3) on and/or off, an operating element (25d) is operable to lift and/or lower the roof (7), an operating element (25c) is operable to start and/or stop the main drive (9), an operating element (25f) is operable to switch on and/or off at least one lighting element (11), and an operating element (25e) is operable to lift and/or lower the paving screed (13),
**characterized in that** the control system (3) is configured to allow starting of the main drive (9) even before the control system (3) itself is fully set to an operating mode after power-up.

2. Road paver according to claim 1, **characterized in that** the control system (3) is configured to load or provide a first software part, which does not comprise all operating functions of the road paver (1), into a working memory until startup of the main drive (9).

3. Road paver according to claim 2, **characterized in that** the control system (3) is configured to load a remaining software part, which enables an operating mode, into the working memory or to activate it.

4. Road paver according to claim 3, **characterized in that** the control system (3) is configured to querying interfaces during the transition to the operating mode to identify which configuration the road paver (1) is set up in.

5. Road paver according to one of the preceding claims, **characterized in that** the operating unit (21) is detachably arranged on the road paver (1).

6. Road paver according to one of the preceding claims, **characterized in that** the operating unit (21) is connected to the control system (3) by means of a cable (31), in particular by means of a detachable plug connection (35).

7. Road paver according to one of the preceding claims, **characterized in that** the operating unit (21) is connected to the control system (3) by means of a radio connection (33).

8. Road paver according to one of the preceding claims, **characterized in that** the operating unit (21) is arranged on the paving screed (13).

9. Road paver according to one of the preceding claims, **characterized in that** the operating unit (21) is arranged on a paving screen climb (19).

10. Road paver according to one of the preceding claims, **characterized by** a lockable cover (39) which, when locked, prevents access to the operating unit (21).

11. Road paver according to one of the preceding claims, **characterized in that** the operating unit (21) has one or a plurality of display elements (27), each of which displays information of one of the components which can be adjusted by means of the operating elements (25).

12. Road paver according to one of the preceding claims, **characterized in that** at least one lighting element (11) is configured to go out after operation of the operating element (25) for switching at least one lighting element (11) on or off after a predetermined period of time has elapsed.

13. Road paver according to one of the preceding claims, **characterized in that** a lifting mechanism (23) is provided for lifting and lowering the roof (7), which lifting mechanism (23) comprises an automatically releasable and automatically lockable end position lock (53, 55, 61).

14. Road paver according to one of the preceding claims, **characterized in that** the operating unit (21) has operating elements (25g) which are provided for controlling functions of the road paver (1) in paving operation.

15. Method for operating a road paver (1) according to one of the claims 1 to 14 comprising a control system (3), a main operator control stand (5), a height-adjustable roof (7), a main drive (9), at least one lighting element (11), a paving screed (13) and an operating unit (21) which has a plurality of operating elements (25), with the method steps of
- Operating an operating element (25f) to switch at least one lighting element (11) on and/or off,
- Operating an operating element (25d) to lift and/or lower the roof (7),
- Operating an operating element (25c) to start and/or stop the main drive (9),
- Operating an operating element (25e) to lift and/or lower the paving screed (13),
**characterized by** the method step
- Operating an operating element (25b) to switch the control system (3) on and/or off, wherein the main drive (9) is started before the control system (3) is completely set to an operating mode after being switched on.

## Revendications

1. Finisseur d'asphalte (1) comprenant un système de pilotage (3), un poste de commande principal (5), un toit réglable en hauteur (7), un entraînement principal (9), au moins un élément d'éclairage (11), une poutre lisseuse (13) et une unité de commande (21), qui est agencée à l'extérieur du poste de commande principal (5) et comporte une pluralité d'éléments de commande (25), dont un élément de commande (25b) actionnable pour allumer et/ou éteindre le système de pilotage (3), un élément de commande (25d) actionnable pour lever et/ou abaisser le toit (7), un élément de commande (25c) actionnable pour démarrer et/ou arrêter l'entraînement principal (9), un élément de commande (25f) actionnable pour allumer et/ou éteindre au moins un élément d'éclairage (11), et un élément de commande (25e) actionnable pour lever et/ou abaisser la poutre lisseuse (13), **caractérisé en ce que** le système de pilotage (3) est configuré pour permettre le démarrage de l'entraînement principal (9) avant même que le système de pilotage (3) n'ait lui-même commuté complètement en mode de fonctionnement après l'allumage.

2. Finisseur d'asphalte selon la revendication 1, **caractérisé en ce que** le système de pilotage (3) est configuré pour charger ou maintenir dans une mémoire vive une première partie logicielle, qui ne comprend pas toutes les fonctions opérationnelles du finisseur d'asphalte (1), jusqu'au démarrage de l'entraînement principal (9).

3. Finisseur d'asphalte selon la revendication 2, **caractérisé en ce que** le système de pilotage (3) est configuré pour, après le démarrage de l'entraînement principal (9), charger ou activer dans la mémoire vive une partie logicielle restante qui permet un mode de fonctionnement.

4. Finisseur d'asphalte selon la revendication 3, **caractérisé en ce que** le système de pilotage (3) est configuré pour interroger des interfaces lors du passage en mode de fonctionnement afin de déterminer la configuration de construction du finisseur d'asphalte (1).

5. Finisseur d'asphalte selon l'une des revendications précédentes, **caractérisé en ce que** l'unité de commande (21) est agencée de manière amovible sur le finisseur d'asphalte (1) .

6. Finisseur d'asphalte selon l'une des revendications précédentes, **caractérisé en ce que** l'unité de commande (21) est connectée au système de pilotage (3) au moyen d'un câble (31), en particulier au moyen d'une connexion enfichable déconnectable (35).

7. Finisseur d'asphalte selon l'une des revendications précédentes, **caractérisé en ce que** l'unité de commande (21) est connectée au système de pilotage (3) au moyen d'une liaison radio (33).

8. Finisseur d'asphalte selon l'une des revendications précédentes, **caractérisé en ce que** l'unité de commande (21) est agencée sur la poutre lisseuse (13).

9. Finisseur d'asphalte selon l'une des revendications précédentes, **caractérisé en ce que** l'unité de commande (21) est agencée sur une passerelle d'escalier (19).

10. Finisseur d'asphalte selon l'une des revendications précédentes, **caractérisé par** un couvercle verrouillable (39) qui, à l'état verrouillé, empêche l'accès à l'unité de commande (21).

11. Finisseur d'asphalte selon l'une des revendications précédentes, **caractérisé en ce que** l'unité de commande (21) comporte un ou plusieurs éléments d'affichage (27) qui affichent chacun une information sur l'un des composants qui peuvent être actionnés au moyen des éléments de commande (25) .

12. Finisseur d'asphalte selon l'une des revendications précédentes, **caractérisé en ce qu'**au moins un élément d'éclairage (11) est configuré pour s'éteindre après un actionnement de l'élément de commande (25) pour allumer ou éteindre au moins un élément d'éclairage (11) après qu'une période prédéterminée s'est écoulée.

13. Finisseur d'asphalte selon l'une des revendications précédentes, **caractérisé en ce qu'**un mécanisme de levage (23) est pourvu pour lever et abaisser le toit (7), comprenant un verrouillage de fin de course à blocage et déblocage automatique (53, 55, 61).

14. Finisseur d'asphalte selon l'une des revendications précédentes, **caractérisé en ce que** l'unité de commande (21) comporte des éléments de commande (25g) qui sont pourvus pour commander les fonctions du finisseur d'asphalte (1) pendant le processus de pose.

15. Procédé de fonctionnement d'un finisseur d'asphalte (1) selon l'une des revendications 1 à 14, comprenant un système de pilotage (3), un poste de commande principal (5), un toit réglable en hauteur (7), un entraînement principal (9), au moins un élément d'éclairage (11), une poutre lisseuse (13), ainsi qu'une unité de commande (21) qui comporte une pluralité d'éléments de commande (25), comprenant les étapes de procédé suivantes :
- actionnement d'un élément de commande (25f) pour allumer et/ou éteindre au moins un élément d'éclairage (11),
- actionnement d'un élément de commande (25d) pour lever et/ou abaisser le toit (7),
- actionnement d'un élément de commande (25c) pour démarrer et/ou arrêter l'entraînement principal (9),
- actionnement d'un élément de commande (25e) pour lever et/ou abaisser la poutre lisseuse (13),
**caractérisé par** l'étape de procédé suivante :
- actionnement d'un élément de commande (25b) pour allumer et/ou éteindre le système de pilotage (3), dans lequel l'entraînement principal (9) est démarré avant que le système de pilotage (3) ne soit complètement commuté en mode de fonctionnement après l'allumage.
